# FASCICULE DE BREVET EUROPEEN

(11) **EP 4 257 247 B1**
(45) Date de publication et mention de la délivrance du brevet: **12.02.2025**
(21) Numéro de dépôt: 23166671.0
(22) Date de dépôt: 05.04.2023
(51) Int. Cl.: B05B 12/14

(54) **INSTRUMENT ET PROCÉDÉ D'INTRODUCTION D'UNE NAVETTE DANS UN CIRCUIT ET INSTALLATION DE PROJECTION DE PRODUIT DE REVÊTEMENT COMPRENANT UN TEL INSTRUMENT**
INSTRUMENT UND VERFAHREN ZUM EINFÜHREN EINES SHUTTLES IN EINE SCHALTUNG UND BESCHICHTUNGSPRODUKTPROJEKTIONSANLAGE MIT EINEM SOLCHEN INSTRUMENT
INSTRUMENT AND METHOD FOR INTRODUCING A SHUTTLE INTO A CIRCUIT AND INSTALLATION FOR PROJECTING A COATING PRODUCT COMPRISING SUCH AN INSTRUMENT

(30) Priorité: 06.04.2022 FR 2203162
(43) Date de publication de la demande: 11.10.2023
(73) Titulaire: Exel Industries, 51200 Epernay (FR)
(72) Inventeur: TARANTINI, Joseph, 51200 Epernay (FR)
(74) Mandataire: Lavoix

(56) Documents cités:
- EP-A1- 0 666 448
- US-A- 6 079 074
- US-B1- 8 601 634

## Description

La présente invention concerne un instrument d'introduction, dans un circuit de circulation de produit de revêtement, d'une navette présentant une polarisation magnétique axiale. La présente invention concerne également une installation de projection de produit de revêtement comprenant un tel instrument. L'invention concerne enfin un procédé d'introduction d'une navette, dans un circuit de circulation de produit de revêtement, au moyen d'un tel instrument.

Dans le domaine des installations de projection de produit de revêtement, il est connu, par exemple de WO-A-2021/009046, de faire circuler une navette, autrement dit un racleur, dans un tuyau appartenant à un circuit de circulation de produit de revêtement destiné à alimenter un projecteur. Un installation conforme à cet art antérieur donne globalement satisfaction. Dans une telle installation, la navette doit être mise en place dans le circuit lors de la mise en service de l'installation, puis périodiquement vérifiée et/ou changée, notamment lors d'opérations de maintenance. Il est donc nécessaire d'introduire ou de réintroduire une navette dans le circuit de façon simple, ce qui a généralement lieu au niveau d'une gare du circuit de circulation de fluide, en débranchant un tuyau flexible. La navette est polarisée magnétiquement et présente des pôles magnétiques positif et négatif, destinés à interagir avec des éléments magnétiques de l'installation, notamment pour détecter la navette au sein du circuit et/ou pour interagir avec un dispositif d'éjection à impulsion, par exemple au niveau d'une gare. Il convient donc d'orienter la navette d'une façon prédéterminée lors de son introduction ou de sa réintroduction dans le circuit.

Une telle navette est de dimensions relativement petites, avec une longueur de l'ordre de 7 millimètres (mm) et un diamètre de l'ordre de 4 mm, ce qui la rend relativement difficile à manipuler, surtout si l'opérateur travaille avec des gants. Il existe donc un risque de faire tomber au sol, voire de perdre, une navette lors de la mise en service de l'installation ou lors d'une opération de maintenance. Un autre risque est d'introduire la navette dans un mauvais sens de polarité par rapport au circuit de circulation de produit de revêtement, ce qui induirait un dysfonctionnement total ou partiel de l'installation.

Il est d'autre part connu de EP-A-0666448 d'utiliser des navettes avec des âmes sphériques, donc sans polarisation magnétique axiale. Ces navettes sont délicates à contrôler.

C'est à ces inconvénients qu'entend plus particulièrement remédier l'invention, en proposant un nouvel instrument, autrement dit un nouvel outil, qui permet d'introduire ou de réintroduire, dans un circuit de circulation de produit de revêtement, une navette qui présente une polarisation magnétique axiale.

A cet effet, l'invention concerne un instrument d'introduction, dans un circuit de circulation de produit de revêtement, d'une navette présentant une polarisation magnétique axiale, l'instrument comprenant une chambre de réception de la navette, formée dans un corps de l'instrument, et une embouchure reliant la chambre de réception à une première extrémité du corps. Conformément à l'invention,:
- la chambre de réception de la navette, est dimensionnée pour recevoir la navette dans une position où un axe de polarisation de la navette est parallèle à un axe longitudinal de la chambre de réception;
- le corps de l'instrument est en matériau amagnétique ;
- l'instrument comprend un levier de commande équipé d'au moins deux aimants et mobile par rapport à la chambre de réception, entre une première position dans laquelle un premier aimant est aligné sur l'axe longitudinal de la chambre de réception, avec un pôle orienté vers la chambre de réception qui présente une première polarité, et une deuxième position dans laquelle le deuxième aimant est aligné sur l'axe longitudinal de la chambre de réception, avec un pôle orienté vers la chambre de réception qui présente une deuxième polarité, opposée à la première polarité.

Grâce à l'invention, la chambre de réception de la navette, ménagée dans le corps de l'instrument, permet de maintenir celui-ci dans une position prédéterminée à l'intérieur du corps, lequel peut être pris en main par un opérateur pour amener la navette jusqu'à proximité d'une zone d'entrée de la navette dans une gare du circuit de circulation de fluide. L'opérateur n'a donc plus à tenir à la main la navette ; il peut se servir de l'instrument pour manipuler la navette, notamment pour approcher la navette de la gare du circuit de circulation de fluide. L'embouchure de l'instrument de l'invention permet de guider la navette jusqu'à la chambre de réception. D'autre part, les premier et deuxième aimants, qui équipent le levier de commande, permettent, pour le premier d'entre eux, d'exercer sur la navette un effort d'attraction et de maintien de position de la navette dans la chambre de réception avec un orientation axiale prédéterminée et, pour le deuxième d'entre eux, d'exercer un effort d'éjection de la navette hors de cette chambre, en direction de la gare du circuit de circulation de fluide.

Selon des aspects avantageux mais non obligatoires de l'invention, un tel instrument peut incorporer une ou plusieurs des caractéristiques suivantes, prises selon toute combinaison techniquement admissible :
- L'embouchure est convergente entre la première extrémité du corps et la chambre de réception et configurée pour guider la navette vers la chambre de réception dans une position où son axe de polarisation est parallèle à l'axe longitudinal de la chambre de réception.
- Les deux aimants du levier de commande sont disposés côte à côte, selon une direction perpendiculaire à l'axe longitudinal de la chambre de réception lorsque le levier de commande est dans sa première position.
- Les deux permanents du levier de commande sont des aimants permanents montés sur une face du levier de commande disposée en regard de la chambre de réception, à l'opposé de l'embouchure par rapport à la chambre de réception, alors que, de préférence, les deux aimants du levier de commande sont affleurants à la face du levier de commande.
- Le corps est équipé d'au moins une lumière de visualisation du contenu de la chambre de réception.
- Le levier de commande est monobloc avec le corps en matériau amagnétique, alors que le levier de commande est mobile, par rapport à la chambre de réception et entre ses première et deuxième positions, par déformation élastique.
- L'instrument comprend, à une deuxième extrémité opposée à la première extrémité, un organe d'extraction de la navette en place dans le circuit de circulation de produit de revêtement vers l'extérieur.
- L'organe d'extraction est un élément en matériau magnétique en contact avec un pôle du premier aimant opposé au pôle qui est orienté vers la chambre de réception dans la première position du levier de commande.
- L'organe d'extraction est disposé à l'intérieur d'une portion tubulaire du corps dont la forme extérieure est configurée pour conformer une extrémité d'un tuyau appartenant au circuit de circulation de fluide.

Selon un deuxième aspect, l'invention concerne une installation de projection de produit de revêtement qui comprend au moins un projecteur de produit de revêtement alimenté, au moins une source de produit de revêtement et un circuit de circulation de produit de revêtement par lequel le projecteur de produit de revêtement est alimenté à partir de la source de produit de revêtement et dans lequel circule au moins une navette. Conformément à l'invention, cette installation comprend un instrument tel que mentionné ci-dessus et elle est agencée pour permettre l'introduction de la navette dans le circuit de circulation de produit de revêtement, au moyen de l'instrument.

L'installation de l'invention présente sensiblement les mêmes avantages que l'instrument mentionné ci-dessus.

Selon des aspects avantageux mais non obligatoires de l'invention, une telle installation peut incorporer une ou plusieurs des caractéristiques suivantes, prises selon toute combinaison techniquement admissible :
- L'Installation comprend en outre une canule d'introduction de la navette dans le circuit de circulation de produit de revêtement et un diamètre interne de la canule est supérieur à un diamètre maximum de la navette et inférieur à un diamètre intérieur de la chambre de réception de l'instrument pour l'introduction de la navette dans le circuit de circulation de produit de revêtement.
- Le circuit de circulation de produit de revêtement comprend un tuyau de circulation de la navette et une canule d'introduction de la navette dans le circuit de circulation de produit de revêtement, alors que la canule et une partie de l'instrument pour l'introduction de la navette dans le circuit de circulation de produit de revêtement présentent la même géométrie et alors que la partie de l'instrument qui présente la même géométrie que la canule est configurée pour conformer une extrémité du tuyau de circulation de la navette pour son montage sur la canule.
- L'Installation comprend une canule d'introduction de la navette dans le circuit de circulation de produit de revêtement, alors que la canule est réalisée dans un matériau dont la dureté Brinell est strictement supérieure à la dureté Brinell du matériau amagnétique du corps de l'instrument pour l'introduction de la navette dans le circuit de circulation de produit de revêtement.

Selon un troisième aspect, l'invention concerne un procédé d'introduction, dans un circuit de circulation de produit de revêtement, d'une navette présentant une polarisation magnétique axiale, ce procédé comprenant au moins les étapes suivantes consistant à :
a) approcher de la navette l'embouchure d'un instrument tel que mentionné ci-dessus, dont le levier de commande est dans sa première position et laisser la navette pénétrer dans la chambre de réception de l'instrument sous l'effet d'une attraction magnétique exercée par son premier aimant aligné sur l'axe longitudinal de la chambre de réception ;
b) disposer la chambre de réception de l'instrument en regard d'une canule d'entrée du circuit de circulation de produit de revêtement; et
c) éjecter la navette, de la chambre de réception dans la canule, en déplaçant le levier de commande de l'instrument dans sa deuxième position, de façon à amener le deuxième aimant dans l'alignement de l'axe longitudinal de la chambre de réception, au point qu'il exerce, sur la navette, un effort de répulsion magnétique hors de la chambre de réception.

Le procédé de l'invention est à la fois simple à mettre en œuvre et fiable, pour une mise en place sécurisée de la navette dans le circuit, avec une orientation prédéterminée de ses portions polarisées.

L'invention sera mieux comprise et d'autres avantages de celle-ci apparaitront plus clairement à la lumière de la description qui va suivre d'un mode de réalisation d'un instrument et d'une installation de projection de produit de revêtement conformes à son principe, donnée uniquement à titre d'exemple et faite en référence aux dessins annexés dans lesquels :
[Fig 1] La figure 1 est une représentation schématique de principe d'une installation de projection de produit de revêtement conforme à l'invention, incorporant un instrument conforme à l'invention ;
[Fig 2] La figure 2 est une vue perspective à plus grande échelle de l'instrument de l'installation de la figure 1 et d'une navette représentée dans trois positions spatiales possibles de la navette vis-à-vis de l'instrument ;
[Fig 3] La figure 3 est une vue à plus grande échelle du détail III à la figure 2, avec arrachement partiel d'une partie avant de l'instrument ;
[Fig 4] La figure 4 est une coupe longitudinale de l'instrument ;
[Fig 5] La figure 5 représente, sur deux inserts A) et B) et à plus grande échelle, le détail V de la figure 4, lorsque la navette est en place dans la chambre de réception de l'instrument, dans deux positions d'utilisation de l'instrument.
[Fig 6] La figure 6 est une vue en perspective de l'instrument de l'invention et d'une partie de l'installation de la figure 1 lors de la mise en œuvre d'un procédé conforme à l'invention ;
[Fig 7] La figure 7 est une vue en perspective selon un autre angle d'une partie de l'installation, de la navette et de l'instrument, avec arrachement partiel d'une partie avant de l'instrument, au terme de l'étape du procédé représentée à la figure 6 ; et
[Fig 8] La figure 8 est une vue analogue à la figure 6 lors d'une utilisation de l'instrument, différente de celle représentée à la figure 6.

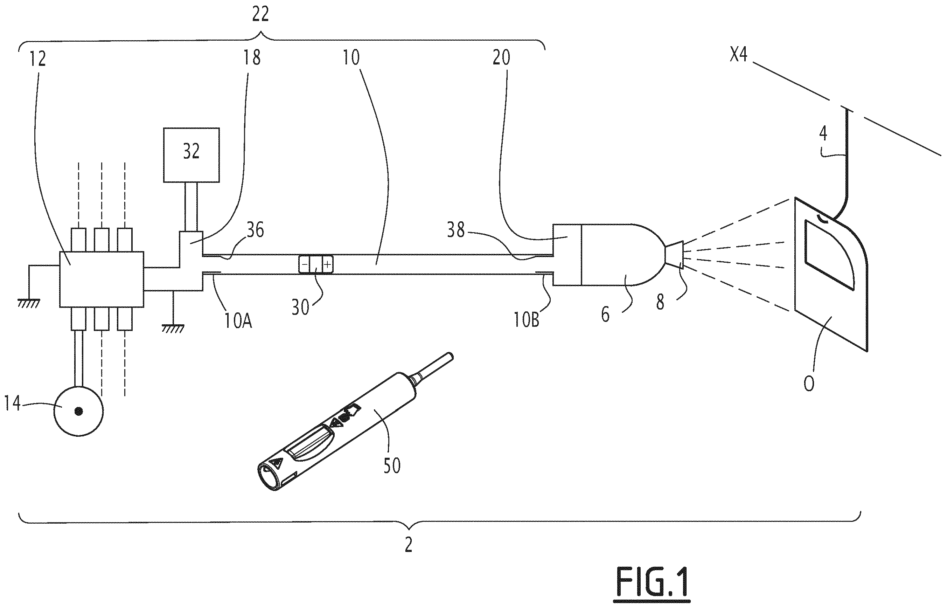

L'installation 2 représentée de façon schématique à la figure 1 est destinée à l'application de produit de revêtement sur des objets O déplacés par un convoyeur 4 le long d'un axe de convoyage X4. Sur la figure 1, les objets O sont représentés sous la forme d'une porte de véhicule automobile. En pratique, ces objets peuvent être constitués par tout ou partie d'une carrosserie de véhicule automobile et, plus globalement, par tout objet devant être revêtu, tel qu'une carcasse d'appareil électroménager, un cadre de cycle ou un accessoire.

L'installation 2 comprend un projecteur 6 de produit de revêtement de type électrostatique équipé d'un bol 8 et alimenté en produit de revêtement au moyen d'un tuyau 10 dans lequel circule un produit de revêtement liquide sélectionné dans un bloc de changement de teinte 12 lui-même raccordé à plusieurs sources 14 de produit de revêtement formées par des réservoirs et dont une seule est représentée à la figure 1, par souci de simplification.

Le projecteur 6 peut être monté sur le bras d'un robot multiaxe ou sur un réciprocateur.

Le type du projecteur 6 n'est pas limitatif. En variante, le projecteur 6 est dépourvu de bol. Selon une autre variante, le projecteur 6 n'est pas de type électrostatique. Selon encore une autre variante, le projecteur 6 est un pistolet manuel.

En variante, l'installation 6 comprend plusieurs projecteurs du type du projecteur 6 ou d'un type différent, alimentés à partir du bloc de changement de teinte 12.

Le bloc de changement de teinte 12 est raccordé fluidiquement à une première gare 18 sur laquelle est raccordée une extrémité amont 10A du tuyau 10. L'extrémité aval 10B du tuyau 10 est raccordée sur une deuxième gare 20, dite gare terminus et intégrée au projecteur 6.

Les éléments 12 à 20 constituent ensemble un circuit 22 de circulation de produit de revêtement liquide entre les sources 14 et le projecteur 6.

Avantageusement, au moins le bloc de changement de produit de revêtement et la gare 18 sont portés au potentiel de la terre en cours de fonctionnement de l'installation 2.

Afin notamment d'assurer une isolation galvanique entre le projecteur 6 porté à la haute tension lorsqu'il fonctionne et le bloc de changement de teinte 12 maintenu en permanence au potentiel de la terre, il est prévu de faire circuler une navette 30 dans le tuyau 10, en la poussant avec un liquide tel que du solvant ou un produit de nettoyage, entre les gares 18 et 20, afin d'évacuer le produit de revêtement présent dans ce tuyau 10 et de constituer ainsi un volume suffisant pour recouvrir la surface de l'objet O. Ceci permet de rincer efficacement le conduit 10 et le projecteur 6 et de limiter les pertes de produit de revêtement.

La navette 30 peur également être désignée par le terme « racleur ».

Le tuyau 10 est avantageusement un tuyau souple réalisée en matériau synthétique, tel que du polytétrafluoroéthylène ou PTFE qui présente des propriétés de rinçabilité et de coefficient de frottement avec la navette satisfaisantes, et installé entre les gares 18 et 20 dans une configuration où il présente des rayons de courbure compatibles avec le déplacement de la navette 30 entre ses extrémités 10A et 10B.

Le matériau du tuyau 10 lui confère une certaine élasticité, mais également une faculté à se déformer plastiquement à froid, comme expliqué ci-après.

Un module de commande électropneumatique 32 est associé à la gare 18 et permet sélectivement de maintenir la navette stationnée dans la gare 18 ou de la libérer. Pour ce faire, le module de commande 32 comprend un pion non représenté de blocage sélectif de la navette, ainsi qu'un dispositif d'éjection à impulsion magnétique, également non représenté. Lorsqu'elle parvient dans la gare terminus 20 au terme de son déplacement entre les extrémités 10A et 10B du tuyau 10, la navette est plaquée contre le fond de la gare 20 par le liquide utilisé pour la pousser. Le retour de la navette 30 en direction de la première gare 18 est obtenu par application sur la navette d'une pression d'air provenant du projecteur 6.

Les gares 18 et 20 sont chacune pourvues d'un logement interne non représenté formant un garage de réception de la navette 30. Il peut ici être fait application de l'enseignement technique de WO-A-2021/009046.

Les extrémités 10A et 10B du tuyau 10 sont respectivement emmanchées et branchées sur une canule de sortie 36 de la première gare 18 et sur une canule d'entrée 38 de la deuxième gare 20. On note X36 un axe longitudinal et central de la canule 36.

La canule est réalisée en acier, de préférence en acier inoxydable de nuance 303, ou dans un autre matériau rigide, notamment métallique. Elle comprend une première partie d'extrémité 361, de forme extérieure tronconique convergente en s'éloignant du corps de la première gare, et une deuxième partie 362, de forme extérieure cylindrique à base circulaire, qui relie la première partie à un filetage 37 de vissage d'un écrou non représenté, utilisé pour immobiliser l'extrémité 10A du tuyau 10 sur la canule. On note D36 le diamètre intérieur minimale de la canule 36.

Lors de la mise en service de l'installation 2, la navette 30 est introduite dans le circuit 22 de circulation de produit de revêtement en débranchant l'extrémité 10A de la canule 36 et en introduisant la navette 30 dans la gare 18, à travers sa canule 36.

Pour ce faire et conformément à l'invention, l'opérateur utilise un instrument 50, que l'on peut également dénommer « outil », qui appartient à l'installation 2 et qui comprend un corps 52 en matériau amagnétique, par exemple en polyamide, notamment de type PA12. Le corps 52 s'étend selon un axe longitudinal X50 de l'instrument 50 et définit, au niveau d'une première extrémité longitudinale 52A du corps 52, dite extrémité avant, une embouchure 54 qui converge vers une chambre 56 dimensionnée pour recevoir une navette 30 avec son axe longitudinale X30 superposé sur un axe longitudinal X56 de cette chambre.

Compte tenu des matériaux dans lesquels la canule 36 et le corps 52 sont respectivement réalisés, le matériau de la canule 36 présente une dureté Brinnel strictement supérieure à la dureté Brinell du matériau amagnétique du corps 52. En pratique, la dureté Brinnel du matériau de la canule peut être sélectionnée avec une valeur proche de celle de l'acier inoxydable de nuance 303, à 180 kg/mm², alors que la dureté Brinnel du matériau du corps 52 peut être sélectionnée avec une valeur proche de celle du polyamide de type PA12, à 8 kg/mm².

Par convention, on considère que l'avant de l'instrument 50 est situé du côté de l'extrémité avant 52A du corps 52 et que l'arrière de l'instrument est situé à l'opposé de cette extrémité.

Ici, les axes longitudinaux X50 et X56 sont superposés. Ceci n'est toutefois pas obligatoire.

En pratique, la navette 30 a une forme allongée, centrée sur l'axe X30 et une section perpendiculaire à l'axe X30 qui est circulaire. La navette 30 comprend un aimant, notamment un aimant permanent, par exemple un aimant au néodyme, non représenté. Une enveloppe en matériau amagnétique de la navette comprend une portion centrale 302 et deux portions d'extrémité 302 et 304. L'aimant de la navette est enchâssé dans l'enveloppe en matériau amagnétique, avec ses pôles négatif et positif respectivement disposés à l'intérieur des portions 304 et 306. Ainsi, la navette 30 présente une polarisation magnétique axiale, avec deux pôles 304 et 306 de polarités opposées situés à ses deux extrémités. L'axe X30 est l'axe de polarisation de la navette. La navette est en forme de tonneau, avec le diamètre des portions d'extrémité qui diminue en s'éloignant de la portion centrale, pour éviter qu'elle se coince dans des zones courbes du tuyau 10.

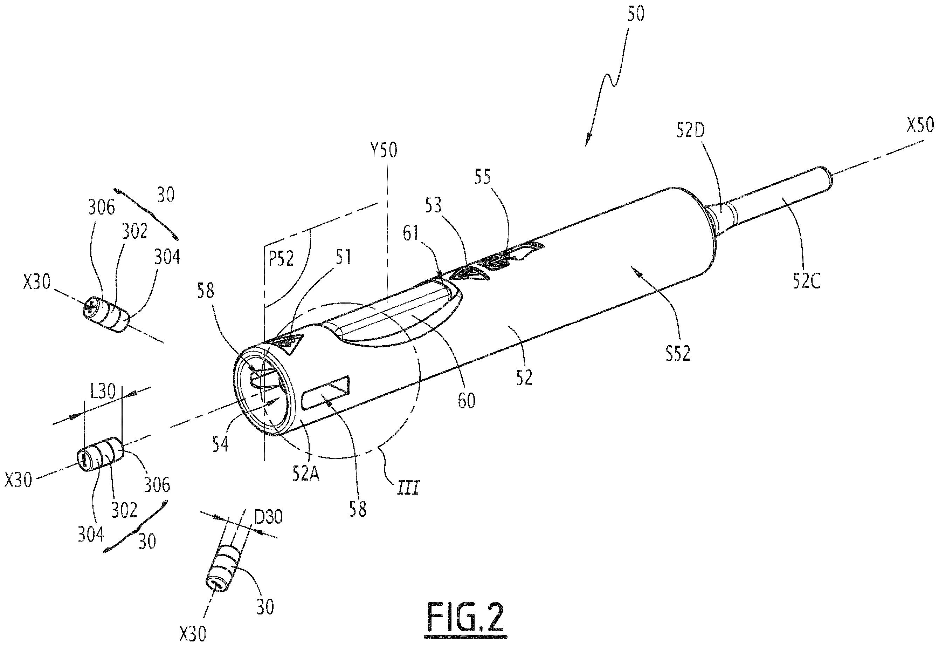

A la figure 2, la navette 30 est représentée dans trois positions possibles vis-à-vis de l'instrument 50. En pratique, la navette 30 peut être disposée dans n'importe qu'elle position vis-à-vis de l'instrument 50.

Les dimensions intérieures de la chambre de réception 56 sont choisies en fonction de la longueur L30 et du diamètre maximum D30 de la navette 30 pour que la navette 30 ne puisse être reçue dans la chambre de réception 56 que dans une configuration où les axes X30 et X56 sont confondus, au jeu de fonctionnement près. En particulier, le diamètre intérieur D56 de la chambre de réception 56 est choisi supérieur à moins de 15% près au diamètre maximum D30 de la navette 30.

En pratique, les dimensions respectives de la canule 36 et de la chambre de réception 56 peuvent être choisies en fonction du diamètre maximum D30 de la navette 30 de telle sorte que le diamètre D36 est supérieur, de préférence strictement supérieur, au diamètre D30 et inférieur, de préférence strictement inférieur, au diamètre intérieur D56.

Par exemple, pour une navette de diamètre D30 égal à 3,85 mm, le diamètre D36 peut être choisi égal à 4 mm et le diamètre D56 peut être choisi égal à 4,5 mm. Les tolérances de fabrication sur la valeur du diamètre D56 peuvent être de l'ordre de 0,3 mm.

L'embouchure 54 présente une surface S54 qui converge vers l'axe X50 en se rapprochant de la chambre de réception 56. En pratique, la surface S54 peut être choisie tronconique et centrée sur l'axe X50.

La surface S54 est configurée pour guider la navette 30 en direction la chambre de réception 56, vers la position où les axes X30 et X56 sont confondus, quelle que soit la position de la navette 30 à l'entrée de l'embouchure 54.

En variante, la chambre de réception 56 peut être configurée pour recevoir la navette 30 dans une position où les axes X30 et X50 sont parallèles, sans être confondus.

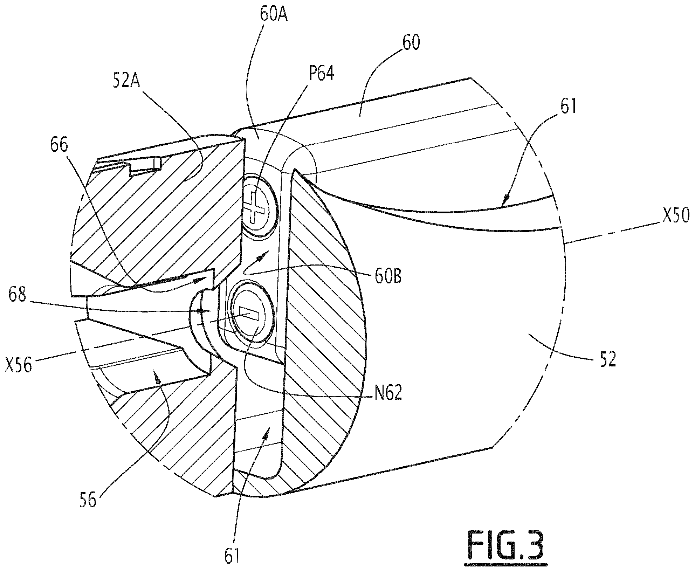

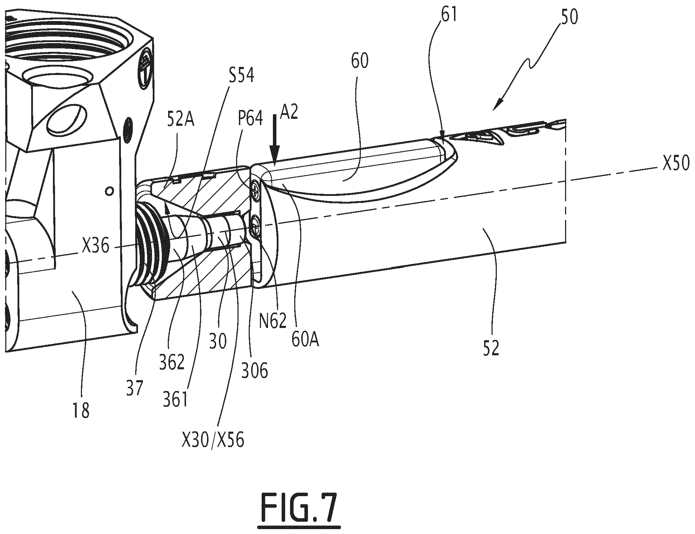

Le corps 52 est pourvu de deux lumières 58 disposées de part et d'autre d'un plan P52 défini par le corps 52 et contenant l'axe X50. Aux figures 3 et 7, une partie de l'extrémité avant 52A située sur la droite du plan P52 à la figure 2, est omise pour visualiser l'embouchure 54, la chambre 56 et la navette 30 en place dans cette chambre.

Les deux lumières 58 permettent de visualiser la chambre de réception 56 depuis l'extérieur du corps 52, en particulier pour détecter la présence de la navette 30 dans la chambre de réception 56, depuis un côté de l'instrument 50.

Une partie du corps 52 définit un levier de commande 60. En d'autres termes, le levier de commande 60 est monobloc avec le reste du corps 52.

Ce levier de commande 60 est disposé, pour l'essentiel, à l'intérieur d'une enveloppe cylindrique à section circulaire contenant la surface externe S52 du corps 52. Le levier de commande est accessible à partir de l'extérieur du corps 52 à travers une encoche 61 qui débouche sur la surface externe S52.

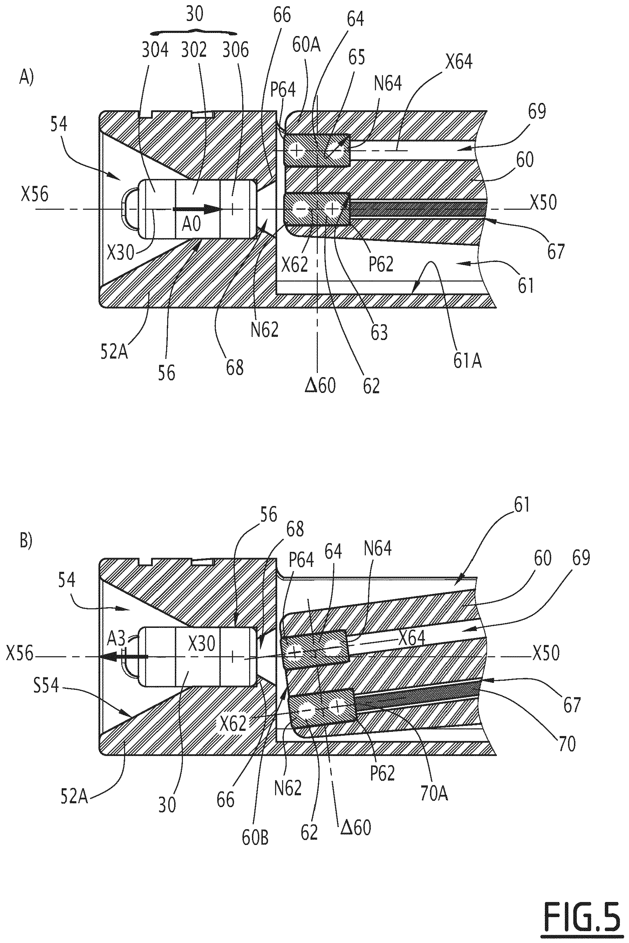

On note Y50 un axe transversal de l'instrument 50, perpendiculaire à l'axe X50 et passant par le centre de l'encoche 61. Les axes X50 et Y50 sont compris dans le plan P52. Le levier de commande est mobile à l'intérieur l'encoche 61, dans un plan parallèle aux axes X50 et Y50, entre une première position non contrainte, représentée notamment aux figures 2 à 4, 6 et 7, ainsi que sur l'insert A) de la figure 5, et une deuxième position, représentée sur l'insert B) de la figure 5, atteinte lorsqu'un opérateur appuie sur le levier de commande, en direction du fond 61A de l'encoche 61. La première position du levier de commande 60 correspond à une configuration de repos du levier 60, c'est-à-dire une configuration en l'absence d'effort exercé sur celui-ci par un opérateur

Le levier de commande 60 porte un premier aimant 62 et un deuxième aimant 64. Ici, les aimants 62 et 64 sont des aimants permanents, de préférence des aimants au néodyme.

Les aimants permanents 62 et 64 sont disposés côte à côte selon une direction Δ60 parallèle à l'axe Y50 et perpendiculaire à l'axe X56, lorsque le levier de commande 60 est dans sa première position.

Les aimants permanents 62 et 64 s'étendent chacun selon un axe longitudinal X62, respectivement X64, parallèle à l'axe X50 lorsque le levier de commande 60 est dans sa première position. L'axe X64 est parallèle à l'axe X62 mais décalé latéralement par rapport à celui-ci. Les axes X62 et X64 sont perpendiculaires à la direction Δ60. Ces axes X62 et X64 sont parallèles à l'axe X50 lorsque le levier de commande 60 est dans sa première position.

L'aimant 62 présente une polarisation axiale, avec un pôle moins ou pôle négatif N62 orienté, selon l'axe X62, vers l'embouchure 54 et vers la chambre de réception 56, c'est-à-dire vers l'avant de l'instrument 50, et un pôle plus ou pôle positif P62 orienté vers l'arrière de l'instrument 50, à l'opposé de l'embouchure et de la chambre de réception. Le deuxième aimant 64 présente également une polarité axiale avec un pôle plus ou pôle positif P64 orienté vers l'avant de l'instrument 50, donc vers l'embouchure 54, et un pôle moins ou pôle négatif N64 orienté vers l'arrière de l'instrument, à l'opposé de cette embouchure.

Ainsi, les deux aimants permanents 62 et 64 sont polarisés axialement, le long des deux axes X62 et X64, en sens opposé puisque le pôle négatif N62 du premier aimant permanent 62 est dirigé vers l'avant de l'instrument 50, alors que le pôle positif P64 du deuxième aimant permanent 64 est dirigé vers l'avant de l'instrument 50.

Dans sa première position représentée aux figures 2 à 4, 6 et 7, ainsi que sur l'insert A) de la figure 5, le levier de commande 60 maintient le premier aimant 62 dans une configuration globalement alignée sur la chambre de réception 56. En d'autres termes, dans la première position du levier de commande 60, les axes X62 et X56 sont globalement alignés. Par « globalement alignés », on entend que les axes en question sont soit alignés, soit parallèles en formant entre eux un angle de moins de 5°, soit décalés latéralement l'un de l'autre d'une distance inférieure à 10% du diamètre D30.

Ici, les axes X62, X56 et X50 sont superposés lorsque le levier de commande 60 est dans sa première position.

Comme cela ressort de la figure 3, le fond 66 de la chambre de réception 56 opposé à l'ouverture 54 est percé d'un orifice 68 en regard duquel est disposé le pôle négatif N62 de l'aimant permanent 62 dans la première position du levier de commande 60.

Dans cette position, l'aimant permanent 62 émet un champ magnétique qui se propage, notamment, dans la chambre de réception 56 et dans l'embouchure 54.

Les premier et deuxième aimants permanents 62 et 64 sont respectivement reçus dans des premier et deuxième logements 63 et 65 ménagés à l'extrémité 60A du levier de commande 60 la plus proche de l'extrémité 52A du corps 52. Les logements 63 et 65 débouchent sur une face d'extrémité 60B du levier de commande 60 qui est perpendiculaire à l'axe X50 et parallèle à l'axe Y50 lorsque le levier de commande 60 est dans sa première position. Cette face d'extrémité 60B peut être qualifiée de face avant du levier 60 car elle est orientée vers l'avant de l'instrument 50.

La face avant 60B est disposée en regard de la chambre de réception 56, à l'opposé de l'embouchure 54. De préférence, les aimants permanents 62 et 64 sont affleurants avec cette face avant 60B.

A l'opposé de la face avant 60B, chacun des premier et deuxième logements 63 et 65 se prolonge par un conduit 67, respectivement 69, qui débouche sur l'arrière du corps 52.

Le conduit 67 relie le logement 63 à une extrémité arrière 52B du corps 52 opposée à l'extrémité avant 52A et qui est ménagée dans un tube 52C monobloc avec le reste du corps 52 et dont le diamètre externe D52 est strictement inférieur au diamètre interne de la canule 36, ce qui permet d'engager le tube 52C dans la canule 36 en cas de nécessité.

Une tige 70 en matériau magnétique, par exemple en acier, est disposée dans le conduit 67 et vient en appui contre le pôle P62 de l'aimant permanent 62 opposé à celui qui est disposé au niveau de la face avant 60B, à savoir le pôle N62. En d'autres termes, la tige 70 est en appui, par une première extrémité 70A, contre le pôle positif P62 de l'aimant permanent 62. Cette tige se prolonge jusqu'au niveau de l'extrémité 52B où est située sa deuxième extrémité 70B, opposée à sa première extrémité 70A.

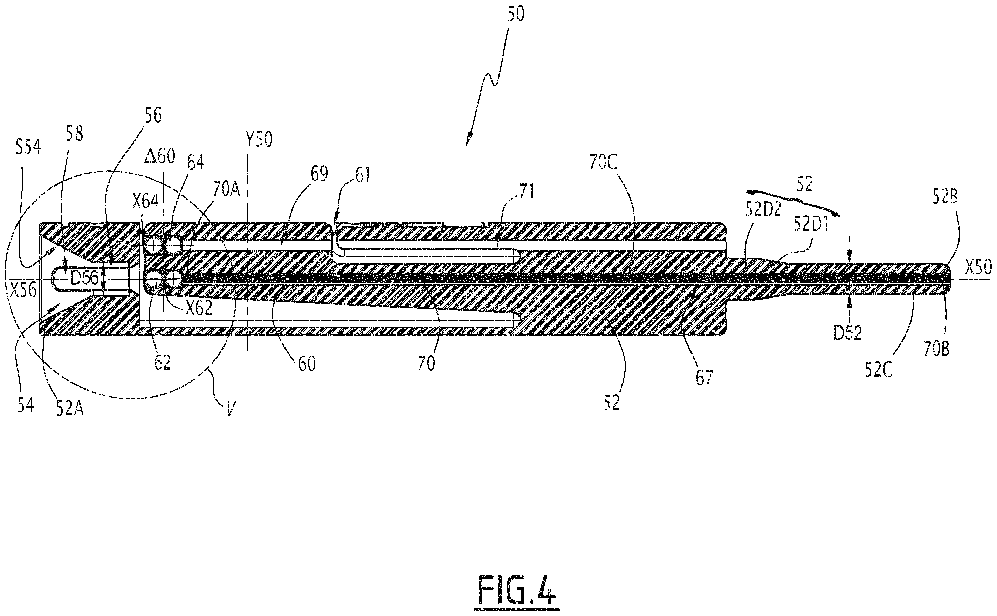

La tige 70 est déformée plastiquement dans une zone 70C intermédiaire entre ses extrémités 70A et 70B. Compte tenu de l'échelle de la figure 4, cette déformation n'est pas visible. Cette déformation localisée de la tige 70 dans la zone 70C permet de lui conférer une géométrie non parfaitement alignée sur l'axe X50, ce qui induit un coincement de la tige 70 dans le conduit 67.

La tige 70, qui est métallique, constitue par ailleurs un élément de rigidification du levier de commande 60, en ce sens qu'elle tend à ramener élastiquement ce levier de commande dans sa première position mentionnée ci-dessus. Ainsi, le levier de commande 60 est mobile, entre ses première et deuxième positions et par rapport à la chambre de réception 56, par déformation élastique du corps 52 et de la tige 70.

Le conduit 69 est vide et disposé, lorsque le levier 60 est dans sa première position, dans le prolongement, selon une direction parallèle à l'axe X50, d'un conduit 71 ménagé dans une autre partie du corps 52.

Les conduits 69 et 71 peuvent recevoir une aiguille de géométrie comparable à celle de la tige 70 lorsqu'il convient d'extraire le deuxième aimant permanent 64 de son logement 65 en exerçant, sur son côté définissant son pôle négatif N64 et opposé à la face 60B, un effort de poussée. Ceci peut être nécessaire en cas d'erreur sur le sens de montage du deuxième aimant permanent 64, lors de l'assemblage de l'instrument 50.

De la même façon, avant mise en place de la tige 70 ou après retrait de celle-ci, une aiguille un peu plus longue que la tige 70 peut être utilisée pour chasser le premier aimant permanent 62 de son logement 63, en cas d'erreur sur le sens de montage de cet aimant.

L'orifice 68 permet, lors de la fabrication de l'instrument 50, de mettre en place les aimants permanents 62 et 64 respectivement dans les logements 63 et 65, en passant par la chambre de réception 56.

L'instrument fonctionne comme explique ci-après.

Lorsque l'extrémité avant 52A du corps 52 est approchée de la navette 30 et lorsque le levier de commande est dans sa première position, la navette est attirée par le champ magnétique créé par le premier aimant permanent 62, jusqu'à pénétrer dans l'embouchure 54 et à parvenir dans la chambre de réception 56 dans la position de l'insert A) de la figure 5, où sa portion polarisée positivement 306 vient en appui contre le fond 66 de la chambre de réception 56, sous l'effet de l'attraction magnétique du pôle négatif N62 de l'aimant permanent 62. Cette attraction magnétique est représentée par la flèche A0 sur l'insert A) de la figure 5.

En d'autres termes, lorsque le levier 60 est dans sa première position, le premier aimant permanent 62 permet d'attirer et de positionner la navette dans la chambre de réception 56, dans une position où les axes X30 et X56 sont alignés et avec une orientation donnée de ses portions polarisées 304 et 306 selon ces axes.

Ce phénomène se produit quelle que soit l'orientation des portions 304 et 306 et quelle que soit la direction de l'axe X30 lorsque l'instrument 50 est approché de la navette 30, ce que représentent les trois positions possibles de la navette 30 à la figure 2.

Ainsi, le fait d'approcher l'instrument 50 de la navette 30, par exemple lorsque celle-ci est tenu par un opérateur dans la paume de sa main, permet d'amener la navette dans une position donnée par rapport au corps 52 de l'instrument 50, à l'intérieur de la chambre de réception 56. Ceci facilite une manipulation ultérieure de la navette 30 par un opérateur, au moyen de l'instrument 50, qui est plus aisé à prendre en main que la seule navette 30. En d'autres termes, quelle que soit la position initiale de la navette 30, il suffit d'approcher l'instrument 50 de la navette, pour que la navette soit capturée par l'instrument 50 et guidée par la surface S54 de l'embouchure 54 vers la chambre 56 où elle est reçue et immobilisée avec une orientation prédéterminée, grâce à l'action du premier aimant permanent 62.

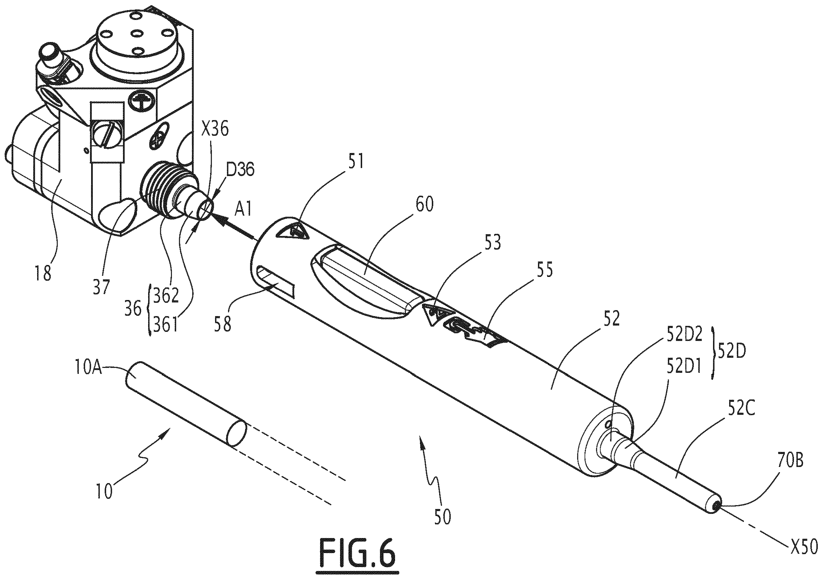

Lorsque la navette 30 a été capturée par l'instrument 50 comme expliqué ci-dessus, et après vérification de la présence de la navette 30 dans la chambre de réception 56 par visualisation à travers une des lumières 58, il est possible pour l'opérateur qui tient efficacement en main l'instrument 50, d'aligner l'axe X50 sur l'axe X36 et de rapprocher l'instrument 50 de la gare 18, selon un mouvement de translation axiale représenté par la flèche A1 à la figure 6.

Ceci a pour effet d'amener l'instrument 50 dans la configuration de la figure 7 où l'extrémité 52A du corps 52 entoure la canule 36 et où la navette 30 est disposée à l'entrée de cette canule 36, les axes X30, X56 et X36 étant alors alignés.

Comme visible à la figure 7, la géométrie de la surface S54 évite toute interaction directe avec la canule 36. En d'autres termes, le centrage de la navette 30 sur la canule 36 n'est pas gêné par un contact intempestif entre l'instrument 50 et la gare 18.

Dans cette configuration, l'opérateur exerce sur l'extrémité 60A du levier 60 un effort représenté par la flèche A2 à la figure 7 et perpendiculaire à l'axe longitudinal X50. En pratique, cet effort est parallèle à l'axe Y50 et à la direction Δ60. Cet effort a pour effet d'amener le levier de commande 60 dans sa deuxième position représentée sur l'insert B) de la figure 5, où le deuxième aimant permanent 64 est en regard de l'orifice 68 et de la portion 306 polarisée positivement de la navette 30. Comme le pôle de l'aimant 64 exposé sur la face avant 60B est le pôle plus P64 du deuxième aimant permanent 64, ce rapprochement du deuxième aimant permanent 64 et de la navette 60 a pour effet d'exercer sur la navette 30 un effort de répulsion magnétique, c'est-à-dire un effort d'éjection de la navette vers l'extérieur de la chambre 56, représenté par la flèche A3 sur l'insert B) la figure 5. Cet effort magnétique de répulsion chasse la navette 30 à l'opposé du fond 66 et le long de l'axe X56, c'est-à-dire vers l'intérieur de la canule 36, le long de l'axe X36.

Ainsi, la navette 30 est injectée dans la gare 18, à travers la canule 36, avec une orientation prédéterminée, qui est la conséquence directe de son orientation au sein de la chambre de réception 56 suite à sa capture par l'instrument 50.

Les flèches A0 et A3 sont alignées sur l'axe X56 est orientées dans deux directions opposées, respectivement vers le fond 66 et à l'opposé du fond 66.

L'instrument 50 est donc efficace pour capturer la navette 30 et pour introduire la navette 30 dans le circuit 22, avec une orientation donnée.

Ceci permet que la navette 30 circule dans le tuyau 10 en conservant cette orientation qui est utile pour interagir avec d'autres éléments magnétiques intégrés aux gares 18 et 20.

L'éjection de la navette 30 vers l'intérieur de la gare 18 a lieu par un simple appui de l'opérateur sur le levier de commande 60 une fois que l'instrument 50 a été correctement positionné par rapport à la canule 36. Les lumières 58 permettent à l'opérateur de visualiser cette éjection et de contrôler que l'opération souhaitée a bien eu lieu.

La manipulation de l'instrument 50 est donc particulièrement simple et comprend essentiellement trois étapes.

Dans une première étape explicitée par un pictogramme 51 ménagé sur le corps 52, l'opérateur approche l'embouchure 54 de la navette 30, qui peut être dans l'une des positions représentées à la figure 2 ou dans une autre position, et laisse la navette pénétrer jusque dans la chambre de réception 56 sous l'action du premier aimant permanent 62 qui est alors aligné sur l'axe longitudinal X56. La navette est automatiquement positionnée de façon correcte pour la suite des opérations.

Dans une deuxième étape, l'opérateur rapproche la chambre de réception 56 de la gare 18, dans le sens de la flèche A1 à la figure 6, jusqu'à disposer cette chambre de réception en regard de la canule 36, ce que représente le deuxième pictogramme 53 apposé sur le corps 52.

Dans une troisième étape, l'opérateur exerce l'effort représenté par la flèche A2, ce qui correspond au pictogramme 55. Ceci amène le levier de commande 60 dans sa deuxième position, donc le deuxième aimant permanent 64 dans l'alignement de l'axe longitudinal X56 de la chambre 56, ce qui a pour effet d'éjecter la navette 30 dans le sens de la flèche A3, par répulsion magnétique entre la portion 306 polarisée positivement et le pôle positif P64 du deuxième aimant permanent 64 qui est disposé au niveau de la face avant 60B du levier de commande.

Lorsque la navette 60 est en place dans la gare 18, on peut utiliser le tube 52C comme gabarit pour conformer l'extrémité 10A du tube 10 aux dimensions extérieures de la canule 36. Pour ce faire, une zone de jonction entre le tube 52C et la partie principale du corps 52 comprend un renflement 52D qui augmente progressivement le diamètre du tube 52C en se rapprochant de la partie principale. Ce renflement est une image à l'échelle 1 de la forme extérieure de la canule 36 et comprend une partie tronconique 52D1 de forme extérieure identique à celle de la première partie d'extrémité 361 de la canule et une partie cylindrique à base circulaire 52D2 de forme extérieure identique à celle de la deuxième partie 362 de la canule. Ainsi, en insérant le tube 52C dans le tuyau 10 par son extrémité 10A, jusqu'à venir recouvrir de renflement 52D, il est possible de dilater l'extrémité 10A et de la conformer, par déformation plastique, avec une forme intérieure voisine de la forme extérieure de la canule 36, ce qui facilite la mise en place ultérieure de l'extrémité 10A autour de la canule.

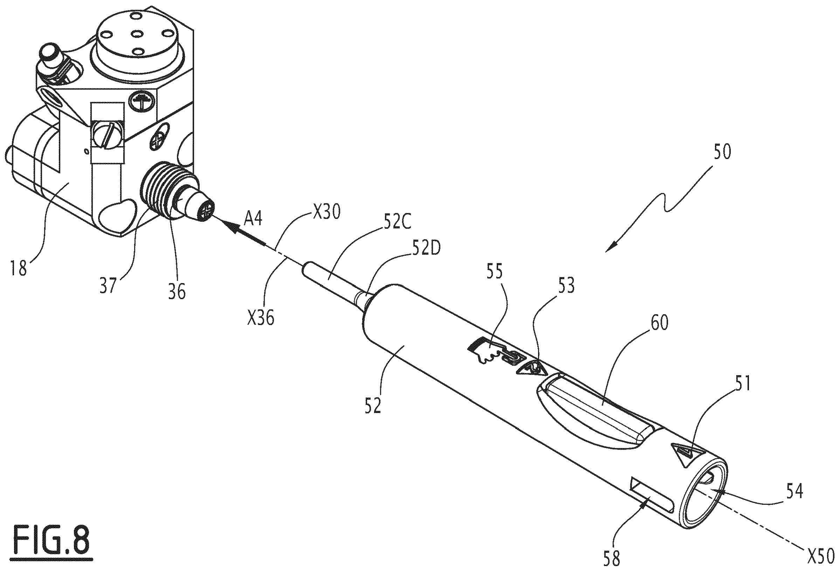

Lorsqu'il convient de récupérer la navette 30 en place dans la gare 18, on utilise l'instrument 50 dans le sens inverse de celui représenté à la figure 6, comme représenté à la figure 8.

Dans ce cas, la portion 306 polarisée positivement de la navette 30 est soit affleurante avec l'extrémité libre de la canule 36, soit accessible à travers la canule.

Il est alors possible, après avoir aligné l'axe X50 sur l'axe X36, d'approcher le tube 52C de la canule 36 comme représenté par la flèche A4 à la figure 8.

Comme l'extrémité 70B de la tige 70 est réalisée dans un matériau magnétique, elle est en quelque sorte aimantée par la portion polarisée 306. Ainsi, un effort d'attraction magnétique s'exerce entre les parties 70B et 306, ce qui permet d'extraire la navette 30 de la gare 18 en exerçant un effort de traction axiale sur l'instrument 50, dans un sens opposé au mouvement d'approche mentionné ci-dessus et représenté par la flèche A4.

Ainsi, la deuxième extrémité 70B de la tige 70 constitue un organe d'extraction de la navette 30 en place dans le circuit 22 de circulation de produit de revêtement vers l'extérieur de ce circuit. L'instrument de l'invention permet donc non seulement d'introduire la navette 30 dans le circuit 22 mais également de retirer la navette de ce circuit, lorsque nécessaire, par exemple pour une opération de maintenance.

En variante, les aimants 62 et 64 sont des électroaimants. Dans ce cas, l'instrument 50 comprend des moyens d'activation de ces électroaimants. Cette approche est moins économique et plus soumise aux risques de panne que celle basée sur des aimants permanents.

En variante, les polarités des premier et deuxième aimants permanents 62 et 64 sont inversées par rapport à ce qui est représenté sur les figures. Dans ce cas, la navette 30 est introduite dans la canule 36 dans le sens opposé à celui représenté sur les figures.

Selon une autre variante, l'introduction de la navette 30 dans le circuit 22 peut avoir lieu au niveau de la deuxième gare 20.

Selon encore une autre variante, le levier de commande 60 comprend plus de deux aimants, permanents ou non.

Selon une autre variante, le levier de commande peut être constitué par une pièce rapportée sur le corps 52, sans être monobloc avec celui-ci.

Les variantes mentionnées ci-dessus peuvent être combinées pour générer de nouveaux modes de réalisation, dans le cadre de l'invention défini par la portée des revendications annexées.

## Revendications

1. Instrument (50) d'introduction, dans un circuit (22) de circulation de produit de revêtement, d'une navette (30) présentant une polarisation magnétique axiale (304, 306), l'instrument comprenant une chambre (56) de réception de la navette (30) formée dans un corps (52) de l'instrument et une embouchure (54) reliant la chambre de réception à une première extrémité (52A) du corps (52), **caractérisé en ce que** :
- la chambre (56) de réception de la navette (30) est dimensionnée pour recevoir la navette dans une position où un axe de polarisation (X30) de la navette est parallèle à un axe longitudinal (X56) de la chambre de réception ;
- le corps (52) de l'instrument (50) est en matériau amagnétique ;
- l'instrument comprend un levier de commande (60) équipé d'au moins deux aimants (62, 64) et mobile par rapport à la chambre de réception (56), entre une première position dans laquelle un premier aimant (62) est aligné sur l'axe longitudinal (X56) de la chambre de réception, avec un pôle (N62) orienté vers la chambre de réception qui présente une première polarité, et une deuxième position dans laquelle le deuxième aimant (64) est aligné sur l'axe longitudinal de la chambre de réception, avec un pôle (P64) orienté vers la chambre de réception qui présente une deuxième polarité, opposée à la première polarité.

2. Instrument selon la revendication 1, **caractérisé en ce que** l'embouchure (54) est convergente entre la première extrémité (52A) du corps (52) et la chambre de réception (56) et configurée pour guider la navette vers la chambre de réception dans une position où son axe de polarisation (X30) est parallèle à l'axe longitudinal (X56) de la chambre de réception.

3. Instrument selon l'une des revendications précédentes, **caractérisé en ce que** les deux aimants (62, 64) du levier de commande (60) sont disposés côte à côte, selon une direction (Δ60) perpendiculaire à l'axe longitudinal (X56) de la chambre de réception lorsque le levier de commande est dans sa première position.

4. Instrument selon l'une des revendications précédentes, **caractérisé en ce que** les deux aimants (62, 64) du levier de commande sont des aimants permanents, **en ce que** mes deux aimant permanents (62, 64) sont montés sur une face (60B) du levier de commande disposée en regard de la chambre de réception (56), à l'opposé de l'embouchure (54) par rapport à la chambre de réception, et **en ce que**, de préférence, les deux aimants du levier de commande sont affleurants à la face du levier de commande.

5. Instrument selon l'une des revendications précédentes, **caractérisé en ce que** le corps (52) est équipé d'au moins une lumière (58) de visualisation du contenu de la chambre de réception (56).

6. Instrument selon l'une des revendications précédentes, **caractérisé en ce que** le levier de commande (60) est monobloc avec le corps (52) en matériau amagnétique et **en ce que** le levier de commande est mobile, par rapport à la chambre de réception (56) et entre ses première et deuxième positions, par déformation élastique.

7. Instrument selon l'une des revendications précédentes, **caractérisé en ce qu'**il comprend, à une deuxième extrémité (52B) opposée à la première extrémité (52A), un organe d'extraction (70B) de la navette (30) en place dans le circuit (22) de circulation de produit de revêtement vers l'extérieur.

8. Instrument selon la revendication 7, **caractérisé en ce que** l'organe d'extraction est un élément (70) en matériau magnétique en contact avec un pôle (P62) du premier aimant (62) opposé au pôle (N62) qui est orienté vers la chambre de réception (56) dans la première position du levier de commande (60).

9. Instrument selon l'une des revendications 7 ou 8, **caractérisé en ce que** l'organe d'extraction (70) est disposé à l'intérieur d'une portion tubulaire (52C) du corps (52) dont la forme extérieure (52D) est configurée pour conformer une extrémité (10A) d'un tuyau (10) appartenant au circuit de circulation de fluide (22).

10. Installation (2) de projection de produit de revêtement, cette installation comprenant au moins un projecteur (6) de produit de revêtement, au moins une source (14) de produit de revêtement et un circuit (22) de circulation de produit de revêtement, par lequel le projecteur de produit de revêtement (6) est alimenté à partir de la source de produit de revêtement (14) et dans lequel circule au moins une navette (30), **caractérisée en ce que** l'installation comprend un instrument (50) selon l'une des revendications précédentes et **en ce que** l'installation est agencée pour permettre l'introduction de la navette (30) dans le circuit de circulation de produit de revêtement (22) au moyen de l'instrument (50).

11. Installation selon la revendication 10, **caractérisée en ce qu'**elle comprend en outre une canule (36) d'introduction de la navette (30) dans le circuit (22) de circulation de produit de revêtement et **en ce qu'**un diamètre interne (D36) de la canule est supérieur à un diamètre maximum (D30) de la navette et inférieur à un diamètre intérieur (D56) de la chambre de réception (56) de l'instrument (50) pour l'introduction de la navette (30) dans le circuit de circulation de produit de revêtement (22).

12. Installation selon la revendication 10, **caractérisée en ce que** le circuit de circulation de produit de revêtement (22) comprend un tuyau (10) de circulation de la navette et une canule (36) d'introduction de la navette (30) dans le circuit de circulation de produit de revêtement, **en ce que** la canule et une partie (52D) de l'instrument pour l'introduction de la navette (30) dans le circuit de circulation de produit de revêtement (22) présentent la même géométrie (361, 362, 52D1, 52D2) et **en ce que** la partie (52D) de l'instrument qui présente la même géométrie que la canule est configurée pour conformer une extrémité (10A) du tuyau (10) de circulation de la navette pour son montage sur la canule.

13. Installation selon la revendication 10, **caractérisée en ce que** qu'elle comprend une canule (36) d'introduction de la navette (30) dans le circuit (22) de circulation de produit de revêtement et **en ce que** la canule est réalisée dans un matériau dont la dureté Brinell est strictement supérieure à la dureté Brinell du matériau amagnétique du corps (52) de l'instrument (50) pour l'introduction de la navette (30) dans le circuit de circulation de produit de revêtement (22).

14. Procédé d'introduction, dans un circuit (22) de circulation de produit de revêtement, d'une navette (30) présentant une polarisation magnétique axiale, **caractérisé en ce que** ce procédé comprend au moins des étapes consistant à :
a) approcher de la navette (30) l'embouchure (54) d'un instrument (50) selon l'une des revendications 1 à 9 dont le levier de commande (60) est dans sa première position et laisser la navette pénétrer dans la chambre de réception (56) de l'instrument sous l'effet d'une attraction magnétique exercée par son premier aimant (62) aligné sur l'axe longitudinal (X56) de la chambre de réception ;
b) disposer (A1) la chambre de réception de l'instrument en regard d'une canule (36) d'entrée du circuit de circulation de produit de revêtement ; et
c) éjecter (A3) la navette (30), de la chambre de réception (56) dans la canule (36), en déplaçant (A2) le levier de commande (60) de l'instrument dans sa deuxième position, de façon à amener le deuxième aimant (64) dans l'alignement de l'axe longitudinal (X56) de la chambre de réception, au point qu'il exerce, sur la navette, un effort de répulsion magnétique (A3) hors de la chambre de réception.

## Patentansprüche

1. Instrument (50) zum Einführen, in einen Kreislauf (22) für Beschichtungsproduktzirkulation, eines Shuttles (30), der eine axiale magnetische Polarisation (304, 306) aufweist, das Instrument umfassend eine Aufnahmekammer (56) des Shuttles (30), die in einem Körper (52) des Instruments gebildet ist, und ein Mundstück (54), das die Aufnahmekammer mit einem ersten Ende (52A) des Körpers (52) verbindet, **dadurch gekennzeichnet, dass**:
- die Aufnahmekammer (56) des Shuttles (30) bemessen ist, um den Shuttle in einer Position aufzunehmen, in der eine Polarisationsachse (X30) des Shuttles parallel zu einer Längsachse (X56) der Aufnahmekammer ist;
- der Körper (52) des Instruments (50) aus einem nichtmagnetischen Material ist;
- das Instrument einen Steuerhebel (60) umfasst, der mit mindestens zwei Magneten (62, 64) ausgestattet ist und in Bezug auf die Aufnahmekammer (56) zwischen einer ersten Position, in der ein erster Magnet (62) auf die Längsachse (X56) der Aufnahmekammer ausgerichtet ist, beweglich ist, mit einem zu der Aufnahmekammer gerichteten Pol (N62), der eine erste Polarität aufweist, und einer zweiten Position, in der der zweite Magnet (64) auf die Längsachse der Aufnahmekammer ausgerichtet ist, mit einem zur Aufnahmekammer gerichteten Pol (P64), der eine zweite Polarität aufweist, die der ersten Polarität entgegengesetzt ist.

2. Instrument nach Anspruch 1, **dadurch gekennzeichnet, dass** das Mundstück (54) zwischen dem ersten Ende (52A) des Körpers (52) und der Aufnahmekammer (56) konvergiert und konfiguriert ist, um den Shuttle in Richtung der Aufnahmekammer in eine Position zu führen, in der seine Polarisationsachse (X30) parallel zu der Längsachse (X56) der Aufnahmekammer ist.

3. Instrument nach einem der vorherigen Ansprüche, **dadurch gekennzeichnet, dass** die zwei Magnete (62, 64) des Steuerhebels (60) nebeneinander in einer Richtung (Δ60) senkrecht zu der Längsachse (X56) der Aufnahmekammer angeordnet sind, wenn der Steuerhebel in seiner ersten Position ist.

4. Instrument nach einem der vorherigen Ansprüche, **dadurch gekennzeichnet, dass** die zwei Magnete (62, 64) des Steuerhebels Permanentmagnete sind, dass die zwei Permanentmagnete (62, 64) auf einer Fläche (60B) des Steuerhebels montiert sind, die gegenüber der Aufnahmekammer (56) angeordnet ist, gegenüber dem Mundstück (54) in Bezug auf die Aufnahmekammer, und dass vorzugsweise die zwei Magnete des Steuerhebels bündig mit der Fläche des Steuerhebels sind.

5. Instrument nach einem der vorherigen Ansprüche, **dadurch gekennzeichnet, dass** der Körper (52) mit mindestens einem Licht (58) zur Visualisierung des Inhalts der Aufnahmekammer (56) ausgestattet ist.

6. Instrument nach einem der vorherigen Ansprüche, **dadurch gekennzeichnet, dass** der Steuerhebel (60) einstückig mit dem Körper (52) aus nichtmagnetischem Material ist und dass der Steuerhebel in Bezug auf die Aufnahmekammer (56) und zwischen seiner ersten und zweiten Position durch elastische Verformung beweglich ist.

7. Instrument nach einem der vorherigen Ansprüche, **dadurch gekennzeichnet, dass** es an einem zweiten Ende (52B), das dem ersten Ende (52A) gegenüberliegt, ein Entnahmeorgan (70B) des Shuttles (30) umfasst, das sich in dem Kreislauf (22) für Beschichtungsproduktzirkulation nach außen befindet.

8. Instrument nach Anspruch 7, **dadurch gekennzeichnet, dass** das Entnahmeorgan ein Element (70) aus magnetischem Material ist, das mit einem Pol (P62) des ersten Magneten (62) in Kontakt ist, der dem Pol (N62) gegenüberliegt, der in der ersten Stellung des Steuerhebels (60) zu der Aufnahmekammer (56) gerichtet ist.

9. Instrument nach einem der Ansprüche 7 oder 8, **dadurch gekennzeichnet, dass** das Entnahmeorgan (70) innerhalb eines rohrförmigen Abschnitts (52C) des Körpers (52) angeordnet ist, dessen äußere Form (52D) konfiguriert ist, um ein Ende (10A) eines Rohrs (10), das zu dem Beschichtungsproduktzirkulationskreislauf (22) gehört, zu formen.

10. Anlage (2) für Beschichtungsproduktprojektion, die Anlage umfassend mindestens einen Beschichtungsproduktprojektor (6), mindestens eine Quelle (14) für Beschichtungsprodukt und einen Beschichtungsproduktzirkulationskreislauf (22), durch den der Beschichtungsproduktprojektor (6) von der Beschichtungsproduktquelle (14) gespeist wird und in dem mindestens ein Shuttle (30) zirkuliert, **dadurch gekennzeichnet, dass** die Anlage ein Instrument (50) nach einem der vorherigen Ansprüche umfasst und dass die Anlage konfiguriert ist, um das Einführen des Shuttles (30) mittels des Instruments (50) in den Beschichtungsproduktzirkulationskreislauf (22) zu ermöglichen.

11. Anlage nach Anspruch 10, **dadurch gekennzeichnet, dass** sie außerdem eine Kanüle (36) zum Einführen des Shuttles (30) in den Beschichtungsproduktzirkulationskreislauf (22) umfasst und dass ein Innendurchmesser (D36) der Kanüle größer ist als ein maximaler Durchmesser (D30) des Shuttles und kleiner als ein Innendurchmesser (D56) der Aufnahmekammer (56) des Instruments (50) zum Einführen des Shuttles (30) in den Beschichtungsproduktzirkulationskreislauf (22).

12. Anlage nach Anspruch 10, **dadurch gekennzeichnet, dass** der Beschichtungsproduktzirkulationskreislauf (22) ein Zirkulationsrohr (10) des Shuttles und eine Kanüle (36) zum Einführen des Shuttles (30) in den Beschichtungsproduktzirkulationskreislauf umfasst, dass die Kanüle und ein Teil (52D) des Instruments zum Einführen des Shuttles (30) in den Beschichtungsproduktzirkulationskreislauf (22) die gleiche Geometrie (361, 362, 52D1, 52D2) aufweisen und dass der Teil (52D) des Instruments, der die gleiche Geometrie wie die Kanüle aufweist, konfiguriert ist, um ein Ende (10A) des Zirkulationsrohrs (10) des Shuttles für seine Montage an der Kanüle zu formen.

13. Anlage nach Anspruch 10, **dadurch gekennzeichnet, dass** sie eine Kanüle (36) zum Einführen des Shuttles (30) in den Beschichtungsproduktzirkulationskreislauf (22) umfasst und dass die Kanüle aus einem Material gefertigt ist, dessen Brinell-Härte strikt größer ist als die Brinell-Härte des nichtmagnetischen Materials des Körpers (52) des Instruments (50) zum Einführen des Shuttles (30) in den Beschichtungsproduktzirkulationskreislauf (22).

14. Verfahren zum Einführen, in einen Beschichtungsproduktzirkulationskreislauf (22), eines Shuttles (30), der eine axiale magnetische Polarisation aufweist, **dadurch gekennzeichnet, dass** das Verfahren mindestens die folgenden Schritte umfasst:
a) Annähern des Shuttles (30) an das Mundstück (54) eines Instruments (50) nach einem der Ansprüche 1 bis 9, dessen Steuerhebel (60) in seiner ersten Position ist, und Eintretenlassen des Shuttles in die Aufnahmekammer (56) des Instruments unter der Wirkung einer magnetischen Anziehung, die von seinem ersten Magneten (62) ausgeübt wird, der auf die Längsachse (X56) der Aufnahmekammer ausgerichtet ist;
b) Anordnen (A1) der Aufnahmekammer des Instruments gegenüber einer Einlasskanüle (36) des Beschichtungsproduktzirkulationskreislaufs; und
c) Auswerfen (A3) des Shuttles (30) aus der Aufnahmekammer (56) in die Kanüle (36) durch Bewegen (A2) des Steuerhebels (60) des Instruments in seine zweite Position, um den zweiten Magneten (64) so weit in eine Linie mit der Längsachse (X56) der Aufnahmekammer zu bringen, dass er auf den Shuttle eine magnetische Abstoßungskraft (A3) nach außerhalb der Aufnahmekammer ausübt.

## Claims

1. An instrument (50) for inserting, into a circuit for circulating a coating product (22), a shuttle (30) having an axial magnetic polarization (304, 306), the instrument comprising a chamber (56) for receiving the shuttle (30) formed in a body (52) of the instrument and a mouth (54) connecting the receiving chamber to a first end (52A) of the body (52), **characterized in that**:
- the chamber (56) for receiving the shuttle (30) is sized for receiving the shuttle in a position where an axis of polarization (X30) of the shuttle is parallel to a longitudinal axis (X56) of the receiving chamber;
- the body (52) of the instrument (50) is in an non-magnetic material;
- the instrument comprises an operating lever (60) equipped with at least two magnets (62, 64) and movable with respect to the receiving chamber (56) between a first position wherein a first magnet (62) is aligned with the longitudinal axis (X56) of the receiving chamber, with a pole (N62) oriented towards the receiving chamber having a first polarity, and a second position wherein the second magnet (64) is aligned with the longitudinal axis of the receiving chamber, with a pole (P64) oriented towards the receiving chamber having a second polarity, which is the opposite of the first polarity.

2. The instrument according to claim 1, **characterized in that** the mouth (54) is convergent between the first end (52A) of the body (52) and the receiving chamber (56) and configured for guiding the shuttle towards the receiving chamber in a position where the polarization axis (X30) thereof is parallel to the longitudinal axis (X56) of the receiving chamber.

3. The instrument according to one of the preceding claims, **characterized in that** the two magnets (62, 64) of the control lever (60) are arranged side by side along a direction (Δ60) perpendicular to the longitudinal axis (X56) of the receiving chamber when the control lever is in the first position thereof.

4. The instrument according to one of the preceding claims, **characterized in that** the two magnets (62, 64) of the control lever are permanent magnets, **in that** the two permanent magnets are mounted on a face (60B) of the control lever facing the receiving chamber (56), opposite the mouth (54) with respect to the receiving chamber, and **in that** the two magnets of the control lever are preferentially flush with the face of the control lever.

5. The instrument according to one of the preceding claims, **characterized in that** the body (52) is equipped with at least one aperture (58) for viewing the contents of the receiving chamber (56).

6. The instrument according to one of the preceding claims, **characterized in that** the control lever (60) is integral with the body (52) made of non-magnetic material and **in that** the control lever is movable with respect to the receiving chamber (56), between the first and the second positions thereof, by elastic deformation.

7. The instrument according to one of the preceding claims, **characterized in that** it comprises, at a second end (52B) opposite the first end (52A), a component (70B) for extracting the shuttle (30) which is in place in the circuit (22) for circulating a coating product to the outside.

8. The instrument according to claim 7, **characterized in that** the extraction component is an element (70) of magnetic material in contact with a pole (P62) of the first magnet (62) opposite the pole (N62) which is oriented towards the receiving chamber (56) in the first position of the control lever (60).

9. The instrument according to one of claims 7 or 8, **characterized in that** the extraction component (70) is arranged inside a tubular portion (52C) of the body (52), the external shape (52D) of which is configured for shaping one end (10A) of a pipe (10) belonging to the fluid circulation circuit (22).

10. An installation (2) for spraying a coating product, the installation comprising at least one sprayer (6) for a coating product, at least one source (14) of coating product and a circuit for circulating a coating product (22), by means of which the sprayer (6) of said coating product is fed from the source (14) of said coating product and where at least one shuttle (30) circulates, **characterized in that** the installation comprises an instrument (50) according to one of the preceding claims and **in that** the installation is arranged for inserting the shuttle (30) into the circuit for circulating a coating product (22) by means of the instrument (50).

11. The installation according to claim 10, **characterized in that** the installation further comprises a cannula (36) for inserting the shuttle (30) into the circuit (22) for circulating a coating product and **in that** an inner diameter (D36) of the cannula is greater than a maximum diameter (D30) of the shuttle and less than an internal diameter (D56) of the receiving chamber (56) of the instrument (50) for inserting the shuttle (30) into the circuit (22) for circulating a coating product.

12. The installation according to claim 10, **characterized in that** the circuit (22) for circulating a coating product comprises a circulation pipe (10) for the shuttle and a cannula (36) for inserting the shuttle (30) into the circuit for circulating a coating product, **in that** the cannula and a part (52D) of the instrument for inserting the shuttle (30) into the circuit (22) for circulating a coating product have the same geometry (361, 362, 52D1, 52D2) and **in that** the part (52D) of the instrument which has the same geometry as the cannula is configured for shaping one end (10A) of the circulation pipe (10) for the shuttle for the mounting thereof on the cannula.

13. The installation according to claim 10, **characterized in that** the installation comprises a cannula (36) for inserting the shuttle (30) into the circuit (22) for circulating the coating product and **in that** the cannula is made of a material the Brinell hardness of which is strictly greater than the Brinell hardness of the non-magnetic material of the body (52) of the instrument (50) for inserting the shuttle (30) into the circuit (22) for circulating a coating product.

14. A method for inserting a shuttle (30) having an axial magnetic polarization into a circuit (22) for circulating a coating product, **characterized in that** said method comprises at least steps consisting of:
a) bringing, close to the shuttle (30), the mouth (54) of an instrument (50) according to one of claims 1 to 9, the control lever (60) of the instrument being in the first position, and allowing the shuttle to enter the receiving chamber (56) of the instrument under the effect of a magnetic attraction exerted by the first magnet (62) thereof aligned with the longitudinal axis (X56) of the receiving chamber;
b) arranging (A1) the receiving chamber for the instrument opposite an inlet cannula (36) of the circuit for circulating a coating product; and
c) ejecting (A3) the shuttle (30) from the receiving chamber (56) into the cannula (36) by moving (A2) the control lever (60) of the instrument into the second position thereof, so that the second magnet (64) is aligned with the longitudinal axis (X56) of the receiving chamber, to the point that same exerts, on the shuttle, a magnetic repulsion force (A3) outside the receiving chamber.
